# EUROPEAN PATENT APPLICATION

(11) **EP 4 843 800 A1**
(43) Date of publication of application: **25.11.2026**
(21) Application number: 26180075.9
(22) Date of filing: 20.05.2026
(51) Int. Cl.: B60G 17/08

(54) **ADAPTIVE SUSPENSION SYSTEM OF A WORK VEHICLE AND RELATED CONTROL METHOD**

(30) Priority: 22.05.2025 IT 202500011659
(71) Applicant: CNH Industrial Italia S.p.A., 10156 Torino (IT)
(72) Inventor: Vighi, Alessia, 10156 Turin (IT)
(74) Representative: CNH Industrial IP Department

(57) **Abstract**

Suspension system (1) for a work vehicle comprising a hydraulic arrangement (7) configured to be fluidly connected to an operative system (8) configured to provide and regulate a pressurized flow of hydraulic fluid towards the cylinder (2),
wherein suspension system (1) comprises an electronic control unit (U) configured to control at least one damping system (9) to regulate the flow and/or pressure of the hydraulic fluid between the cylinder (2) and at least one accumulator (11) in function of an ambient temperature (T').

## Description

### TECHNICAL FIELD

The present invention relates to a front axle for a work vehicle and a suspension system for a work vehicle.

The present invention has a preferred, though not exclusive, application in the field of work vehicles, for example agricultural tractors, earth moving machines, off-road vehicles. Reference to this application will be made below by way of example.

### BACKGROUND OF THE INVENTION

Work vehicles such as agricultural vehicles, i.e. tractors, are provided with suspension systems adapted to control vehicle body movement, in order to absorb ground bumps and unevenness and maintain stable the vehicle body during work vehicle travelling, for example during work vehicle braking or cornering.

Conventional hydraulically actuated suspension systems are provided with hydraulic accumulators and damping valves configured to control the ride and handling of the vehicle.

In particular, such suspension systems are designed to provide a predetermined damping level in ideal conditions, in particular when the ambient temperature is about 20°C and the suspension oil temperature is about 70°C.

However, real operating conditions deviate significantly from the aforementioned ideal conditions.

Changes in ambient and oil temperatures can significantly affect damping performance due to changes in accumulator behavior and oil viscosity.

This leads to inconsistent suspension behavior in different ambient conditions (e.g. summer vs winter).

In fact, changes in ambient temperature induce changes in pre-charge pressure inside the accumulators, directly affecting the stiffness of the suspension. Higher temperatures increase pre-charge pressure, leading to a stiffer suspension, while lower temperatures reduce it, resulting in a softer suspension.

This temperature sensitivity affects the consistency of the suspension response.

Additionally, oil viscosity is inversely related to temperature. Lower temperatures increase oil viscosity, affecting the flow rate through the damping valves and altering damping force.

This phenomenon is particularly pronounced in systems with long, narrow hydraulic lines, where increased viscosity leads to a slow damping response, especially during cold starts.

These temperature variations in accumulator behavior and oil viscosity result in unpredictable and suboptimal suspension performance, especially when a vehicle operates in widely varying climates or experiences significant temperature fluctuations.

It is therefore evident that these well-known conventional systems do not provide sufficiently accurate or responsive compensation for the dynamic changes in ambient temperature encountered during typical vehicle operation.

Therefore, there is a need to improve existing dampers for axle of vehicles to improve their performance while maintaining such dampers simple, inexpensive, reliable and compact.

The aim of the present invention is to overcome the aforementioned drawbacks, in an optimised and economical manner.

### SUMMARY OF THE INVENTION

The above purpose is achieved by a suspension system and by a control method as claimed in the attached claims forming an integral part of this description.

### BRIEF DESCRIPTION OF DRAWINGS

For a better understanding of the present invention, a preferred embodiment is described in the following, by way of a non-limiting example, with reference to the attached drawings wherein:
- Figure 1 is a schematic view of a portion of a suspension system for a work vehicle comprising a damping system according to the invention; and

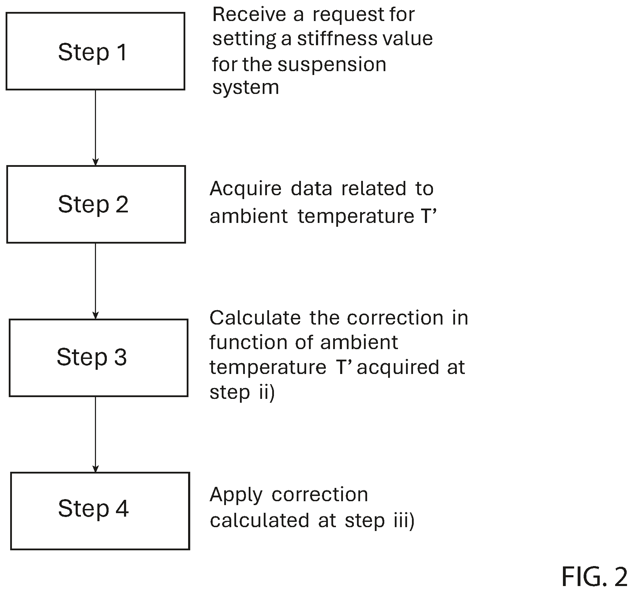

- Figure 2 is a schematic representation of a flow chart indicating the steps of a control method according to the invention.

### DETAILED DESCRIPTION OF THE INVENTION

Suspension system for work vehicle (not shown) is configured to support vehicle's body by damping vibration and oscillations due to road asperities.

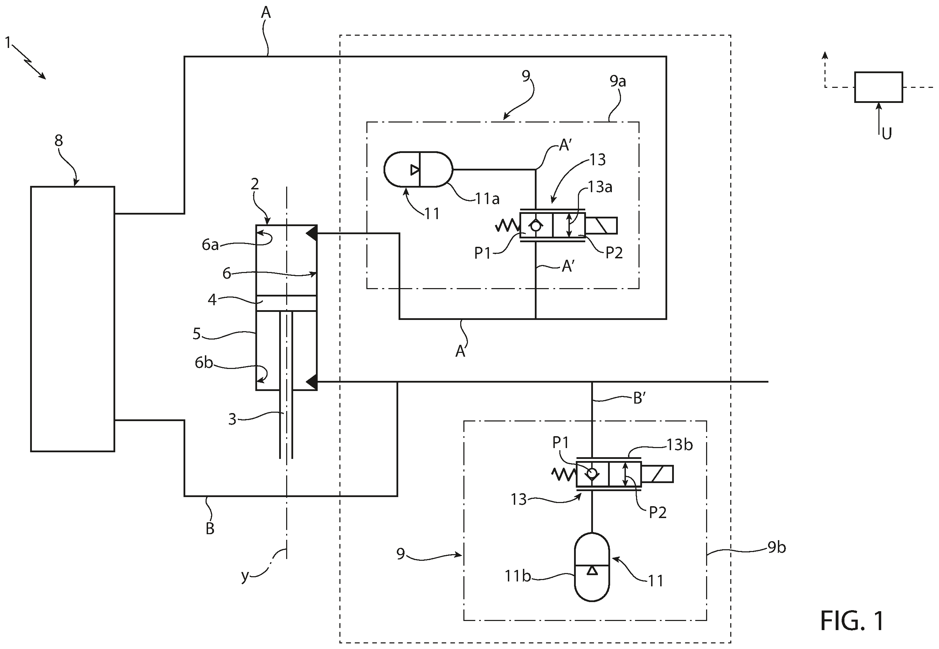

In figure 1, a suspension system is illustrated, and it is generically indicated with reference number 1.

In particular, according to an embodiment of the invention, suspension system 1 is carried by a front axle (not shown) of the work vehicle.

Reference will be made to such particular use in the following description without any limitation.

As known, suspension system 1 comprises a hydraulic cylinder 2 configured to be interposed between the front axle and the body of the vehicle.

In particular, the cylinder 2 comprises a rod 3 and a piston 4.

A first one between the cylinder 2 and the rod 3 is connected to the vehicle body, the second one between the cylinder 2 and the rod 3 is connected to the axle, according to the specific suspension configuration.

Advantageously, the cylinder 2 comprises a housing 5 defining a space 6 configured to accommodate the piston 4 sliding therein in a tight manner and at least a portion of the rod 3.

In particular, the housing 5 extends along a reference axis Y and, consequently, the rod 3 also extends along the same axis Y.

In use, piston 4 performs a reciprocating movement along axis Y.

According to the above, the piston 4 defines within the space 6 a piston chamber 6a and a rod chamber 6b both configured to house, in use, hydraulic fluid.

The suspension system 1 comprises a hydraulic arrangement 7 fluidly connected to an operative system 8 of the vehicle from one side and to the cylinder 2 on the other side.

In particular, the operative system 8 of the vehicle is configured to provide and regulate, in use, pressurized hydraulic flow of the hydraulic fluid to the cylinder 2, as per se known.

The hydraulic fluid connection and regulation between the operative system 8 of the vehicle and the cylinder 2 occurs in a known way and it is not further disclosed for brevity.

In particular, the hydraulic arrangement 7 comprises at least one conduit fluidly connecting the operative system 8 to at least one between the piston chamber 6a and the rod chamber 6b.

In detail, the hydraulic arrangement 7 preferably comprises a first conduit A fluidly connecting the operative system 8 to the piston chamber 6a and a second conduit B fluidly connecting the operative system 8 to the rod chamber 6b.

The hydraulic arrangement 7 further comprises at least one damping system 9 configured to control the flow of hydraulic fluid from and towards the hydraulic cylinder 2, in particular at least one between the piston chamber 6a and the rod chamber 6b, in order to control the damping of the same hydraulic cylinder 2.

More in detail, the at least one damping system 9 is fluidly connected to the at least one conduit in order to regulate the flow of the hydraulic fluid from and towards the at least one between the piston chamber 6a and the rod chamber 6b.

Furthermore, damping systems 9 comprise at least one accumulator 11 configured to store, as known, the hydraulic fluid at pressure.

In particular, accumulators 11 are fluidly connected to at least one between the piston chamber 6a and the rod chamber 6b.

According to the preferred embodiment of the present invention, hydraulic arrangement 7 preferably comprises a pair of damping systems 9a and 9b respectively fluidly connected to piston chamber 6a and rod chamber 6b.

In addition, damping system 9a preferably comprises a first accumulator 11a fluidly connected to the first conduit A and to piston chamber 6a by a conduit A' branching off from conduit A.

Damping system 9b preferably comprises a second accumulator 11b fluidly connected to the second conduit B and to rod chamber 6b by conduit B' branching off from conduit B.

Furthermore, damping system 9 comprises valve means 13 fluidly interposed between accumulator 11 and at least one between the piston chamber 6a and the rod chamber 6b.

Advantageously, valve means 13 are configured to regulate the flow of hydraulic fluid between accumulator 11 at least one between the piston chamber 6a and the rod chamber 6b, and vice versa.

More in detail, damping system 9a preferably comprises valve means 13a arranged along conduit A' and fluidly interposed between accumulator 11a and piston chamber 6a.

Advantageously, valve means 13a are configured to regulate the flow of hydraulic fluid between accumulator 11a and piston chamber 6a, and vice versa.

In addition, damping system 9b preferably comprises valve means 13b arranged along conduit B' and fluidly interposed between accumulator 11b and rod chamber 6b.

Advantageously, valve means 13b are configured to regulate the flow of hydraulic fluid between accumulator 11b and rod chamber 6b, and vice versa.

As known, accumulators 11a and 11b may be of many typologies.

In the disclosed embodiment, they are hydro-pneumatic accumulators, i.e. they essentially comprise a reservoir configured to define a space configured to house one or more fluids, in particular a pressurization fluid and the hydraulic fluid.

Exemplarily, the reservoir comprises a movable and/or flexible element housed within the space, configured to separate the pressurized fluid from the hydraulic fluid.

In particular, the movable and/or flexible element is connected to the inner surface of the reservoir dividing the space into a first portion housing the pressurization fluid and a second portion housing the hydraulic fluid.

Advantageously, the movable and/or flexible element is configured to vary the relative size of the first and second portions according to the volume of the fluids contained therein.

In particular, the second portion of each accumulator 11a and 11b is fluidly connected to a respective at least one valve means.

In the disclosed embodiment, valve means 13a and 13b preferably comprise two-positions, two-ways valve, more in detail a proportional electro-actuated valve.

The first port/way of valve means 13 is preferably fluidly connected to the corresponding accumulator 11.

The second port/way of valve means 13 is preferably fluidly connected to the corresponding chamber between the piston chamber 6a and the rod chamber 6b.

With reference to the example illustrated in Figure 1, valve means 13 may assume a first or neutral position P1, in which it allows mono-directional fluid communication from accumulator 11 to the corresponding chamber between the piston chamber 6a and the rod chamber 6b.

In other words, in the first position P1, valve means 13 preferably work as a non-return valve.

In addition, valve means 13 may assume a second or active position P2, in which it allows bidirectional fluid communication between accumulator 11 and the corresponding chamber between the piston chamber 6a and the rod chamber 6b.

Valve means 13a and 13b preferably further comprise resistance or biasing means, in particular a spring, configured to bias the corresponding valve means 13a and 13b in a predetermined position, in particular in the first position P1.

More in detail, valve means 13a and 13b preferably comprise a body and a movable spool movably carried by the body and configured to define the positions of the corresponding valve means 13a and 13b. The biasing means are configured to oppose to movement of the movable spool.

With reference to the preferred embodiment illustrated in Figure 1, valve means 13a and 13b comprise actuation means, in particular a solenoid, configured to move the corresponding valve means 13a and 13b in the second position P2.

According to the preferred embodiment of the present invention, suspension system 1 preferably comprises sensor means 15 configured to acquire data indicative of the actual ambient temperature T'. It is understood that sensor means 15 may comprise a temperature sensor carried by work vehicle 1 and configured to acquire data indicating the ambient temperature T' of the environment in which the work vehicle is located.

Advantageously, suspension system 1 comprises an electronic control unit U configured to control the damping systems 9, 10 to regulate the flow and/or pressure of the hydraulic fluid between the cylinder 2 and at least one accumulator 11, 12 in function of an ambient temperature T'.

It is understood that electronic control unit U may comprise the VCU (Vehicle Control Unit), the Driveline control unit, the ECU (Engine Control Unit) and/or a similar control unit carried by the work vehicle.

In particular, electronic control unit U is electrically connected at least to the valve means 13, in particular to their solenoid, and comprises electronic elaboration means configured to control valve means 13 in function of the ambient temperature T'.

More in detail, electronic control unit U is preferably further connected to sensor means 15 and is configured to control valve means 13 as a function of the data provided by sensor means 15, preferably in an automatic manner according to the control logic further described below.

In particular, the electronic control unit U preferably controls valve means 13 in order to vary the corrected pre-charge accumulator pressure p' of the corresponding accumulator 11 in function of the ambient temperature T'.

Preferably, electronic control unit U is configured to increase the pre-charge pressure p' of the corresponding accumulator 11 when the ambient temperature T' increases with respect to a reference temperature T.

Vice versa, electronic control unit U is preferably configured to decrease the corrected pre-charge accumulator pressure p' of the corresponding accumulator 11 when the ambient temperature T' decreases with respect to a reference temperature T.

More in detail, electronic control unit U is preferably configured to control the corrected pre-charge pressure p' proportionally to the ambient temperature T'.

Preferably, electronic control unit U is configured to determine/calculate the corrected pre-charge accumulator pressure p' of accumulator 11 as function of the actual ambient temperature T according to the following mathematical equation: $p ′ = p \frac{T ′}{T}$ wherein:
p' = corrected pre-charge accumulator pressure
p = reference pre-charge accumulator pressure
T' = actual ambient temperature
T = reference temperature

Preferably, T is equal 293 K.

Preferably, electronic control unit U is configured to determine the corrected pre-charge accumulator pressure p' automatically, substantially in real time on the basis of the data provided by sensor means 15.

In addition, electronic control unit U is configured to determine/calculate the reference pre-charge pressure p as function of the reference chamber target pressure pr within one between the piston chamber 6a and the rod chamber 6b, in stationary or rest condition, as per se known and therefore not further described.

The reference chamber target pressure pr value may be stored within storage means of the electronic control unit U.

Suspension system 1, or alternatively the work vehicle, may comprise a user interface electrically connected to electronic control unit U and configured to allow a user to set the reference target pressure pr to be reached within the corresponding one between the piston chamber 6a and the rod chamber 6b in rest or stationary conditions.

Electronic control unit U may be further configured to calculate a corrected chamber target pressure pr' on the basis of the reference chamber target pressure pr and the actual position of the piston 4 within the housing 5, preferably according to the following mathematical equation: $pr ′ = \frac{p \frac{T ′}{T} V}{\frac{p \frac{T ′}{T} V}{{p}_{r}} - \left(A∗x\right)}$ wherein:
pr' = corrected chamber target pressure,
pr = reference chamber target pressure,
p' = corrected pre-charge accumulator pressure,
p= reference pre-charge accumulator pressure,
T' = actual ambient temperature,
T = reference temperature,
V = volume of the accumulator,
A = effective compression area,
x = distance of the piston from its neutral position. Preferably, pressure values pr', pr, p' and p are expressed in bar; temperature values T' and T are expressed in Kelvin (K); distance x, area A and volume V are expressed, respectively, in mm, mm^2 and mm^3.

In particular, reference temperature T, reference pre-charge accumulator pressure p, volume V and effective compression area A are data memorized in the storage means of electronic control unit U.

As per se known, the effective compression area A of the rod chamber is equal to the area of the piston 4 minus the area of the rod 3.

More in detail, the effective compression area A may be calculated according to the following formula: $A = {A}_{p} - \left(\frac{{{πd}_{rod}}^{2}}{4}\right)$ wherein:
A = effective compression area,
Aₚ = piston area,
d_{rod} = rod diameter.

The operation of the embodiment of the suspension system 1 according to the above-described invention is the following.

Initially, the suspension system 1 is in an equilibrium state supporting the vehicle load. In particular, the accumulators 11 are pre-loaded and the piston 4 is in a neutral position in the cylinder 2.

When the vehicle travels on irregular/rough terrain, the piston 4 of the cylinder 2 is subject a retracting and/or extending movement along its axis Y.

Specifically, retraction is the movement of the piston 4 into the space 6 of the housing 5 so that the rod 3 retracts into the housing 5, thereby causing an increase in the volume of the rod chamber 6b and a decrease in the volume of the piston chamber 6a.

Conversely, extension is the movement of the piston 4 which pushes the rod 3 out of the housing 5, causing an increase in the volume of the piston chamber 6a and a decrease in the volume of the rod chamber 6b.

In the suspension system 1, when the piston 4 travels within the housing 5, the hydraulic fluid is compressed out of the corresponding chamber 6a or 6b and it is forced through a calibrated orifice, thereby, absorbing the energy applied to the cylinder and damping vehicle body movements/oscillations.

In the case of retraction, hydraulic fluid is forced out of piston chamber 6a via first conduit A.

Hydraulic fluid flows through damping system 9 to first accumulator 11a, compressing the pressurization fluid preferably by the displacement of the movable and/or flexible elements.

Furthermore, the hydraulic fluid flow accumulator 11a through conduit A' is regulated by valve means 13a.

In addition, in the case of retraction, the second accumulator 11b releases the stored hydraulic fluid housed in the second portion of the same accumulator 11b by pushing the fluid into the rod chamber 6b.

Also in this case, the hydraulic fluid flow from accumulator 11b through conduit B' is regulated by valve means 13b.

During extension, suspension system 1 works opposite to the retraction.

In use, sensor means 15 measure the actual ambient temperature T' and provide data to the control unit U indicative of the measured temperature T'.

Accordingly, electric control unit U controls damping system 9, in particular valve means 13, in order to regulate the hydraulic fluid flow between the cylinder 2 and at least one accumulator 11 in function of the ambient temperature T'.

In view of the foregoing, the present invention also relates to a control method for the suspension system 1 as described above.

This control method, preferably performed by the electronic control unit U, comprises the steps of:
i) Receive a request for setting a stiffness value for the suspension system 1;
ii) Acquire data related to ambient temperature T';
iii) Calculate the correction in function of the ambient temperature T' acquired at step ii); and
iv) Apply the correction calculated at step iii).

In detail, as described at steps i) and ii), electronic control unit U receives an input from the user and the ambient temperature value T' from the sensor means 15.

As described at step iii), electronic control unit U calculates the pre-charge pressure value p' in function of the ambient temperature T' for at least one accumulator 11 in order to compensate for the changes in their behaviour induced by the ambient temperature T' variation with respect to the reference temperature T.

As disclosed above, pre-charge pressure p' is calculated by the electronic control unit U proportionally with respect to ambient temperature T'.

Accordingly, as the ambient temperature T' increases, the pre-charge pressure values p' increases to oppose the tendency of at least one accumulator 11, 12 to become stiffer.

Conversely, as the ambient temperature T' decreases, the pre-charge pressure values p' decreases to counteract the tendency of at least one accumulator 11 to become softer.

Furthermore, in the case of temperature compensation by controlling at least one damping system 9, the electronic control unit U regulates the electric signals sent to at least one valve means 13 to compensate for temperature-induced changes in the viscosity of the hydraulic fluid.

Accordingly, as the ambient temperature T' increases, the hydraulic fluid becomes less viscous, in other words reduces its viscosity, while as the ambient temperature T' decreases, the hydraulic fluid becomes more viscous, in other words increases its viscosity.

In view of the foregoing, the advantages of a suspension system and a related control method according to the invention are apparent.

Thanks to the presence of the electronic control unit U it is possible to calculate and apply corrections to the pre-charge pressure p' of the accumulator 11 in order to take into account the actual ambient temperature T' of the environment in which the work vehicle 1 is located and ensuring a constant suspension stiffness even if the ambient temperature T' experiences large variations.

In addition, the U-electronic control unit regulates the signals to the valve means 13, compensating for temperature-induced changes in oil viscosity to maintain the desired damping force.

Thus, by making real-time regulations, the desired suspension behaviour (stiffness and damping) can be maintained despite temperature changes.

Furthermore, by actively regulating the preload pressure value, the system opposes the suspension's tendency to become stiffer in hot weather and softer in cold weather.

Furthermore, since oil viscosity changes with temperature (thicker when cold and thinner when hot), these regulations to the valve means 13, 14 ensure to provide the correct damping force regardless of oil viscosity.

Advantageously, separate damping systems 9, 10 allow independent control of fluid flow restriction in each direction of cylinder 2 movement (extension and retraction).

Using two separate accumulators 11, 12 allows the system to independently control the suspension stiffness and response in the extension and retraction directions.

Likewise, the above considerations also apply to damping systems 9 as they are critical for controlling the rate of movement and energy dissipation in each direction.

Advantageously, calculating the pre-charge pressure in function of the actual ambient temperature T' measured by the sensor means 15 (and controlling the valve means) independently for each accumulator 11 allows the system 1 to compensate for these asymmetric behaviours more effectively.

Furthermore, by maintaining optimal operating conditions, suspension system 1 can reduce the wear of the suspension components.

Finally, it is clear that modifications and variations can be made to the suspension system 1 and to the relative control method according to the present invention, which however do not go beyond the scope of protection defined by the claims.

Clearly, the type of valve means, accumulators, fluid connections, mobile and/or flexible elements can vary.

Obviously, as mentioned, different types of hydraulic fluids can be used.

Furthermore, the sensor means can be placed in proximity, inside or outside the suspension system.

## Claims

1. Suspension system (1) for a work vehicle comprising at least one cylinder (2) extending along an axis (Y) and defining a space (6) configured to house hydraulic fluid for providing a suspension force to a portion of said work vehicle;
wherein said cylinder (2) comprises a housing (5) defining space (6) configured to house a rod (3) carrying a piston (4),
said piston (4) sliding in said space (6) in fluid tight manner thereby defining within said space (6) a piston chamber (6a) and a rod chamber (6b),
wherein said suspension system (1) comprises a hydraulic arrangement (7) configured to be fluidly connected to an operative system (8) of the work vehicle from one side and to said cylinder (2) on the other side, wherein said operative system (8) is configured to provide and regulate a pressurized flow of hydraulic fluid toward said cylinder (2),
wherein said hydraulic arrangement (7) comprises at least one damping system (9) provided with at least one accumulator (11) fluidly connected to at least one between said piston chamber (6a) and said rod chamber (6b) and at least one valve means (13) fluidly interposed between said at least one accumulator (11) and said at least one between said piston chamber (6a) and said rod chamber (6b),
wherein said suspension system (1) comprises an electronic control unit (U) configured to control said at least one damping system (9) to regulate the flow and/or pressure of the hydraulic fluid between said cylinder (2) and said at least one accumulator (11) in function of an ambient temperature (T').

2. Suspension system according to claim 1, wherein said electronic control unit (U) is configured to control at least one between:
- said valve means (13) in function of said ambient temperature (T'); and/or
- said at least one accumulator (11) in function of said ambient temperature (T').

3. Suspension system according to claim 1 or 2, wherein said electronic control unit (U) is configured to provide an electric signal to said at least one valve means (13) to regulate the flow between said cylinder (2) and said at least one accumulator (11) in function of an ambient temperature (T').

4. Suspension system according to claim 3, wherein said valve means (13) comprise a proportional electro-actuated valve.

5. Suspension system according to claim 3 or 4, wherein said valve means (13) comprise at least one two-positions, two-ways valve,
a first port of said valve is fluidly connected to said accumulator (11) and a second port of said valve is configured to be fluidly connected to said operative system (8),
said valve being configured to assume alternatively a first position (P1) in which it allows mono-directional fluid communication from said accumulator (11) to said at least one between said piston chamber (6a) and said rod chamber (6b) or a second position (P2) in which said valve allows bidirectional fluid communication between said accumulator (11) and said at least one between said piston chamber (6a) and said rod chamber (6b).

6. Suspension system according to any of the preceding claims, wherein said electronic control unit (U) is configured to control said valve means (13) by varying a corrected pre-charge accumulator pressure (p') of the corresponding said accumulator (11) in function of said ambient temperature (T').

7. Suspension system according to claim 6, wherein said electronic control unit (U) is configured to control said corrected pre-charge pressure (p') proportionally to said ambient temperature (T').

8. Suspension system according to claim 6 or 7, wherein said corrected pre-charge accumulator pressure (p') is calculated by said electronic control unit (U) the following mathematical equation: $pr ′ = \frac{p \frac{T ′}{T} V}{\frac{p \frac{T ′}{T} V}{{p}_{r}} - \left(A∗x\right)}$ wherein:
(pr')= corrected chamber target pressure,
(pr)= reference chamber target pressure,
(p')= corrected pre-charge accumulator pressure,
(p)= reference pre-charge accumulator pressure,
(T')= actual ambient temperature,
(T)= reference temperature,
(V)= volume of the accumulator,
(A)= effective compression area,
(x)= distance of the piston from its neutral position.

9. Suspension system according to claim 8, wherein said reference temperature (T), said reference pre-charge accumulator pressure (p), said volume (V) and said effective compression area (A) are data memorized in said electronic control unit (U).

10. Suspension system according to any of claims 7 to 9, wherein said ambient temperature (T') is acquired by sensor means (15) of said vehicle and/or by external measurement.

11. Suspension system according to claim 8, wherein said reference chamber target pressure (pr) is provided by the user or stored within storage means of said electronic control unit (U).

12. Control method for a suspension system according to any of the preceding claims comprising the following steps:
i) Receive a request for setting a stiffness value for the suspension system (1);
ii) Acquire data related to said ambient temperature (T');
iii) Calculate the correction in function of said ambient temperature (T') acquired at step ii); and
iv) Apply said correction calculated at step iii).

13. Control method for a suspension system according to claim 12, wherein said data are acquired by said sensor means (15) and/or by telematic data acquisition.

14. Control method for a suspension system according to claim 12 or 13, wherein said calculation comprises to calculate said corrected chamber target pressure (pr').

15. Work vehicle comprising a suspension system realized according to any of claims from 1 to 11, wherein said electronic control unit (U) is configured to carry out the control method according to claim 12, 13 or 14.
